# EUROPEAN PATENT SPECIFICATION

(11) **EP 3 286 236 B1**
(45) Date of publication and mention of the grant of the patent: **19.10.2022**
(21) Application number: 16724484.7
(22) Date of filing: 23.03.2016
(51) Int. Cl.: C08G 14/14

(54) **PRODUCTION PROCESS OF THE RESINS CONTAINING POLYFLAVONOID AND DERIVATIVES AND THEIR APPLICATION IN THE WOOD BASED COMPOSITE BOARD PRODUCTS**
VERFAHREN ZUR HERSTELLUNG VON HARZEN MIT POLYFLAVONOID UND DERIVATEN UND DEREN VERWENDUNG BEI VERBUNDPLATTENPRODUKTEN AUF HOLZBASIS
PROCÉDÉ DE PRODUCTION DE RÉSINES CONTENANT UN POLYFLAVONOÏDE ET DES DÉRIVÉS ET LEUR APPLICATION DANS DES PRODUITS DE PANNEAUX COMPOSITES À BASE DE BOIS

(30) Priority: 21.04.2015 TR 201504881
(43) Date of publication of application: 28.02.2018
(73) Proprietor: Kastamonu Entegre Agac Sanayi Anonim Sirketi, Kastamonu (TR)
(72) Inventor: KOC, Enüs, Kastamonu (TR); CAMLIBEL, Osman, Kastamonu (TR); CELIK, Ugur, Kastamonu (TR)
(74) Representative: Dericioglu, E. Korhan
(86) International application number: PCT/TR2016/050074
(87) International publication number: WO 2017/023218

(56) References cited:
- EP-A1- 0 648 807
- EP-A2- 0 961 813
- WO-A1-2004/058843
- US-A1- 2013 287 993
- US-A1- 2013 289 191
- AMINE MOUBARIK ET AL: "Mechanical characterization of industrial particleboard panels glued with cornstarch-mimosa tannin-urea formaldehyde resins", JOURNAL OF ADHESION SCIENCE AND TECHNOLOGY, vol. 27, no. 4, 1 February 2013 (2013-02-01), pages 423-429, XP055284108, GB ISSN: 0169-4243, DOI: 10.1080/01694243.2012.711739
- M Elbadawi ET AL: "Mechanical and physical properties of particleboards made from Ailanthus wood and UF resin fortified by Acacias tannins blend", Environ. Sci, 1 January 2015 (2015-01-01), pages 1016-1021, XP055284290, Retrieved from the Internet: URL:http://www.jmaterenvironsci.com/Docume nt/vol6/vol6_N4/120-JMES-1324-2015-Elbadaw i.pdf
- A. PIZZI: "The chemistry and development of tannin/urea-formaldehyde condensates for exterior wood adhesives", JOURNAL OF APPLIED POLYMER SCIENCE, vol. 23, no. 9, 1 May 1979 (1979-05-01), pages 2777-2792, XP055284295, US ISSN: 0021-8995, DOI: 10.1002/app.1979.070230922
- BORAN SEVDA ET AL: "The efficiency of tannin as a formaldehyde scavenger chemical in medium density fiberboard", COMPOSITES PART B: ENGINEERING, vol. 43, no. 5, 11 August 2011 (2011-08-11), pages 2487-2491, XP028918942, ISSN: 1359-8368, DOI: 10.1016/J.COMPOSITESB.2011.08.004
- HONG LEI ET AL: "Environmentally friendly mixed tannin/lignin wood resins", JOURNAL OF APPLIED POLYMER SCIENCE, vol. 107, no. 1, 1 January 2007 (2007-01-01), pages 203-209, XP055284306, US ISSN: 0021-8995, DOI: 10.1002/app.27011

## Description

### TECHNICAL FIELD OF THE INVENTION

The main component of the invention is the polymeric flavonoid compounds of which the chemical composition is of an organic nature, which consists of a blend of different aromatic structures and most of which are glycosidized substances with phenolic feature. The molecular weights of the chemical composition range between 500 and 20.000, and it is composed of water-soluble polyphenolic compounds. These compounds are capable of associating with other polymers such as proteins and polysaccharides.

The application area of the resin, produced in variable molar ratios, of the present invention is wood-based composite products, and is related to reducing the production costs, making production without sacrificing the performance speed of the process and reducing the free formaldehyde level of the board. The polyflavonoid compounds are the organic-based water-soluble complex polymeric flavonoids and derivative compounds which have a wide dispersion in the plants, contribute to the invention and enhance the performance of the resin in question, are capable of reducing the free formaldehyde level of the wood-based boards produced and deactivating the free formaldehyde in the final condensation reaction step during hot pressing process. The said poly flavonoid compounds constitute a next-generation hybrid copolymer resin synthesized with urea formaldehyde resin in the reactor. Therefore, the invention is about the use of this resin in the production of E0, E1, CARB1, CARB2-standard boards in the wood-based composite (MDF, CB, etc.) production without using formaldehyde catcher in the wood-based composite products and its application method. This application is described in the application section along with specific references.

### ABBREVIATIONS AND DEFINITIONS

MDF: Medium Density Fiberboard
HDF: High Density Fiberboard
CB: Chipboard
OSB: Oriented Strand Board
CL: Core Layer
SL: Surface Layer
F: Formaldehyde
U: Urea
UF: Urea-Formaldehyde (Copolymer) Resin
UFKT-37: Urea Formaldehyde Kastamonu Entegre Glue
P: Polyflavonoid
TS EN 120: Perforator Method
TS EN 717-1: Chamber Method
E0: European standard formaldehyde emission limit (TS EN 120) < 3mg free formaldehyde/100 g (composite board), TS EN 717-1 < 0,062 mg/m³ outdoor free formaldehyde.
E1: European standard formaldehyde emission limit (TS EN 120) < 8mg free formaldehyde/100 g (composite board), TS EN 717-1 ≤0,124 mg/m³ outdoor free formaldehyde.
E2: European standard formaldehyde emission limit ≤ 30mg free formaldehyde/100 g (composite board), TS EN 717-1 > 0,124 mg/m³ outdoor free formaldehyde.
CARB 1: California Air Resource Board Phase I. (effective as of 07/2009)
CARB2: California Air Resource Board Phase II. (effective as of 07/2012)

### STATE OF THE ART

The demand for the forest products with wood-like low formaldehyde emission has increased due to the rapid population growth in the world, industrialization, commissioning of the high-capacity forest product facilities and increasing awareness among the consumers. The urea formaldehyde resin is used at, optionally, various molar ratios during the dry-process production and joining of the boards in 90% of the world's wood-based composite production. The urea formaldehyde resin produced at different molar ratios is stabilized as a result of the final reaction under hot press with the catalytic effect of the ammonium salts. Amino-component resins enter into polycondensation reaction at 80 to 110°C temperature depending on the utilization ratio of acids and salts.

Today, the free formaldehyde levels of the boards produced with urea formaldehyde resin synthesized at different molar ratios are in E2 standard and it is possible to produce wood-based composite (MDF, CB) products using this resin. In the production of wood-based composite products on the other hand, it is possible to produce boards comparable to E1 standards by adding catcher (formaldehyde catcher) solution into the urea formaldehyde resin. However, depending on the amount of the catcher solution used, this leads to a yield loss in the process, an increase in the resin consumption to ensure that the composite product maintains its characteristics (mechanical, physical tests) and, accordingly, an increase in the production cost of the wood-based composite product.

Despite the use of ordinary urea formaldehyde glue and catcher (formaldehyde catcher) solution in the production of wood-based composites (MDF, CB) products, it is only possible to produce a board in E0, E1, CARB1, CARB2 standards with high production costs. It is therefore not possible to reduce the free formaldehyde values of the wood-based composite (MDF, CB) products to a value equal to that of the unprocessed natural wood. For this reason, it becomes impossible to produce health-sensitive wood-based composite (MDF, CB) products which improve the air quality of indoor spaces.

The industrial wood-based composite products are preferred by consumers as an alternative to natural wood-based materials, owing to their aesthetic and natural structure, processability and ease of use. With regards the industrial wood-based composite products, the consumers of industrial and final products request for a free formaldehyde level that is equal to that of the unprocessed natural woods. In the production of wood-based composite products (MDF, CB), synthetic resins are used for binding purposes (as binding agents). In this sector, the synthetic resins are preferred due to their ease of use and affordable prices.

The synthetic resins of the invention allow for the production of boards of which the free formaldehyde level is equal to that of the unprocessed natural woods (in E0, E1, CARB1, CARB2 standards) in composite board products (MDF, CB) owing to its content of polyflavonoid derivative compounds as well as the chemical structure and form of the said compound.

This compound which is named as "organic-based compound" in all resins of amino group used in order to produce a composite board in the said standards for the wood-based composite products and allows for the production of composite boards with low formaldehyde emission will be referred to as "polyflavonoid and derivatives (condensed tannin; monoflavonoids and bioflavonoids polymeric compounds and derivatives)". The compound in question is introduced into the reaction in the production of urea formaldehyde resins. The synthesized copolymer-type resin is named as "next-generation hybrid resin (Urea Formaldehyde Kastamonu Entegre Glue; UFKT-37)".

The urea formaldehyde resins are used at various molar ratios for adhesive purposes in the production of wood-based composite products. Various researches have been conducted on the use of the glues containing flavonoid polymeric compounds and derivatives which are extracted from renewable sources and have phenolic properties. The laboratory-scale resins were produced upon synthesis of particularly the flavonoid polymeric compounds and derivatives with formaldehyde. With regards to these resins, studies were conducted on the production of chipboard and plywood with a high physical resistance against humid ambient conditions.

The polyflavonoid is used as both a cross-linking and catcher agent in the reaction phases of the amino-based synthetic resins due to the chemical structure and properties of the compounds and, also, accelerates 10 to 50 times the reaction. In general, the cross-linking takes place in the urea formaldehyde form. The shelf life of the urea formaldehyde resin (UFKT-37) produced using the aforesaid compound varies depending on the percentage of the said compound in the urea formaldehyde resin, the phase of addition of the polyflavonoid compounds to the reaction during the synthesis of the urea formaldehyde resin as well as the pH, temperature and density of the final resin form.

The scientific studies are generally conducted on the use of carbohydrates derived from organic biomass material (flavonoid compounds) in the phenol-based resin production instead of phenol.

The monoflavonoid and bioflavonoid polymeric compounds and derivatives, the subject matter of the invention, are extracted from a special tree. Among these tree species, the most common species are *Acacia mollissima L, Schinopsis lorenzii, Hemlock, Tsuga canadensis, Pinaceae.* The monoflavonoid and biflavonoid compounds in question have a high molecular weight. These are the compounds that cannot be decomposed with hydrolytic enzymes and turn into phlobaphene with strong acids, of which the sugar-free content is linked with C-C bonds.

The studies on the formaldehyde resin synthesis with polyflavonoid compound date back to 1950s. In later years, the studies conducted by Plomley proved that the resin synthesized as a result of the polyflavonoids and formaldehyde reaction are suitable raw materials for the production of chipboards and plywood. Given the production conditions then, their use in the board industry as a cross-linking agent showed a slow development due to the problems encountered in practice.

The polyflavonoid polymeric compounds and derivatives in question are organic chemical compounds of natural origin. Since the said compounds are in a phenolic structure, several studies were conducted on the standard preparation and use technologies applied to phenol formaldehyde resins. These organic compounds consist of 5 to 11 monoflavonoid units based on the polyflavonoid molecule. In monoflavonoid units, 2 phenolic rings (A and B) are linked by a heterocyclic ring. These compounds can enter into a reaction 10 to 50 times faster than the reaction of phenol with formaldehyde under similar conditions owing to their resorsinolic or floroglucinolic A-rings.

Since they are condensed during the reaction, the flavonoid derivative compounds accelerate the reaction of the resin containing methylol reactive groups for their flavonoid structure. Therefore, the flavonoid resoles are not stable, and their storage and usage time are relatively short. The chemical structure of the polyflavanoid compound in question is given below in the Formula X.

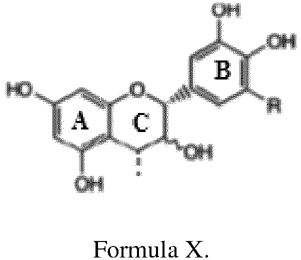

The said compound gains a specific characteristic depending on the hydroxylation in A and B rings. The utmost general reaction of the A-ring is the substitution of the hydrogen atom's electrons. Hence, this increases the reactivity of the said compound. The hydroxyls in its structure constitute strong electron donors. The more the number of hydroxyls in the ring's structure is, the more the electron density of that ring increases. Thus, it acquires a better nucleophilic structure. Therefore, the nucleophilic structures turn into more stable carbocation structure as a result of attacks from outside. The flavonoids structures are linked together and form polyflavonoid molecules; these compounds are shown with Formula Y.

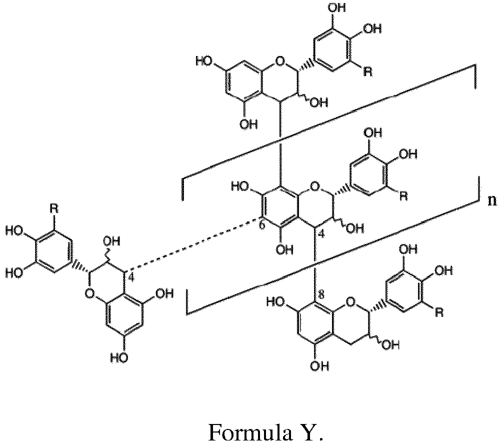

Several studies have been conducted on the use of various types of bark extracts as cross-linkig agents in the chipboard production and on the usability in outdoor conditions of the chipboards produced using bark extracts.

In these studies, generally, the paraformaldehyde, hexamine or urea-HCHO concentrates are added before application of the resin in question as an adhesive. Besides, methanol is added in general to this glue in order to check the viscosity, extend the lifetime and prevent gelation in the preparation of resin. The polyflavonoid extract is composed of a series of polymeric oligomers which usually form polymers. Therefore, there is no need to form a prepolymer as in the reaction of formaldehyde with phenol. This leads to a need for a small amount of formaldehyde only for hardening purposes. The fast reactivity, on the other hand, ensures a rapid gelation time, a shorter press time compared to that of the phenol formaldehyde glues and an excellent resistance to outdoor conditions.

The urea resins are the first amino resins used in practice. In 1920s, the urea-formaldehyde reaction products were used as a molding, cross-linking and coating agent in various industrial fields. The studies conducted in this regard are as follows: US 1912593 the copolymeric compounds made up of urea formaldehyde and polyhydroxy phenols and their use in tanning processes, EP1266730 extraction of glue from melamine-urea-formaldehyde or phenol-urea-formaldehyde copolymeric compounds, EP639434 extraction of glue from urea-formaldehyde, melamine-urea-formaldehyde or tannin-formaldehyde copolymeric compounds and their use in medium density fiberboard production.

In the prior state of the art, it was a necessity to use formaldehyde catchers (catcher agent) in order to produce wood-based composite products with low formaldehyde emission. These formaldehyde catcher agents lead both to a decrease in the production speed during the process and to an increase in the production costs. However, the inventors managed to eliminate these problems in this area subject-matter of the invention by synthesizing the polyflavanoid-urea formaldehyde next-generation hybrid resin using polyflavonoid polymeric organic compounds.

Owing to the present invention, the condensation product resin containing polyflavonoid polymeric compounds which is synthesized with urea formaldehyde resin at different molar (F:U) ratios is capable of decreasing the production costs of the boards in E0, E1, CARB1, CARB2 produced without using formaldehyde catcher in the production of wood-based composite (MDF, CB) products and optimizing these products for the TS EN standards in terms of physical and mechanical strength and reducing the free formaldehyde level of these products to the free formaldehyde level of unprocessed natural wood. Therefore, the forest product composite boards produced using this resin brings about advantages in terms of affordability, occupational health and safety and ecological factors, and make a reform in improving the air quality in indoor spaces.

WO2004058843 is known in the art and discloses a resin composition comprising a copolymer of (a) a tannin; (b) an amino compound; (c) an aldehyde; (d) a stabilizer to impart stability to the tannin-amino compound-aldehyde copolymer.

In a paper known in the art, it discloses a study of utility and performance of optimal laboratory cornstarch-mimosa tannin-based resins in the industrial particleboard production [Amine Moubarik et. al: "Mechanical characterization of industrial particleboard panels glued with cornstarch-mimosa tannin-urea formaldehyde resins", JOURNAL OF ADHESION SCIENCE AND TECHNOLOGY, vol. 27, no.4, 2013-02-01, pages 423-429, XP055284108, ISSN: 0169-4243, DOI: 10.1080/01694243.2012.711739].

In a paper known in the art, it discloses a study of the influence of adding a blend of tannins extracted from the bark of two Acacia species on the mechanical and physical properties of laboratory particleboards made from UF resin and underutilized raw materials [M Elbadawi et. al.: "Mechanical and physical properties of particleboards made from Ailanthus wood and UF resin fortified by Acacias tannins blend", Environ. Sci., 2015-01-01, pages 1016-1021, XP055284290, retrieved from the Internet: URL: https://www.jmaterenvironsci.com/Document/vol6/vol6_N4/120-JMES-1324-2015-Elbadawi.pdf]

In a paper known in the art, it discloses a study of the chemistry and development of tannin/urea-formaldehyde condensates for exterior wood adhesives [A. Pizzi: "The chemistry and development of tannin/urea-formaldehyde condensates for exterior wood adhesives ", JOURNAL OF APPLIED POLYMER SCIENCE, vol.23, no. 9, 1979-05-01, pages 2777-2792, XP055284295, US, ISSN: 0021-8995, DOI: 10.10021appl.1979.070230922]*.*

In a paper known in the art, it discloses a study of determining the effect of tannin content of urea formaldehyde (UF) resin on the panel properties of medium density fiberboard (MDF) [Boran Sevda et. al.: "The efficiency of tannin as a formaldehyde scavenger chemical in medium density fiberboard", COMPOSITES PART B:ENGINEERING, vol. 43, no. 5, 2011-08-11, pages 2487-2491, XP028918942, ISSN: 1359-8368, DOI: 10.1016/J.COMPOSITESB.2011.08.004].

US2013287993 is known in the art and discloses composite products made with binder compositions that include tannins and multifunctional aldehydes.

In a paper known in the art, it discloses a study of obtaining lignin-based wood adhesives for the manufacture of wood particleboard [Hong Lei et. al.: "Environmentally friendly mixed tannin/lignin wood resins", JOURNAL OF APPLIED POLYMER SCIENCE, 2007-01-01, Pages 203-209, XP055284306, US; ISSN: 0021-8995, DOI: 10.1002/app.27011].

EP0961813 is known in the art and discloses an adhesive composition comprising: (i) one or more water-soluble carbohydrates derived from a lignocellulosic material, (ii) one or more phenolic compounds provided by an extract from bark, wood or nut shells, whereby the one or more phenolic compounds are copolymerisable with the one or more water-soluble carbohydrates, and (iii) an aldehyde.

EP0648807 is known in the art and discloses a binding agent based on tannin, wherein said binding agent can be cured at elevated temperatures and is compatible with cellulose-containing materials, for example wood, and are suitable for the production of wood materials, such as chipboard. US2013289191 is known in the art and discloses composite products made with lewis acid catalyzed binder compositions that include tannins and multifunctional aldehydes.

### PURPOSE OF THE INVENTION

The purpose of the present invention is to reduce the production costs, increase the yield and ensure production of products in E0, E1, CARB1, CARB2 standards in the production of wood-based composite boards which meet the above requirements, eliminate the said disadvantages and bring additional advantages as well as to ensure a healthier working environment for the workers by creating a clean air atmosphere during the wood-based composite board production processes. Therefore, the free formaldehyde value of the products manufactured using the resin in question goes down to a level equal to that of the untreated natural wood.

In the production of MDF (medium density fiberboard) boards; lignocellulosic raw materials, adhesives, hydrophobic materials, hardening agents, fire-retardant chemicals -optionally for special products- and natural durability-enhancing chemicals (against the fungal and insect damage) are used. The percentile values of the MDF produced by dry process is as follows: 80% wood and other lignocellulosic materials, 10-12% chemicals, 7-10% moisture.

### MDF (Medium Density Fiberboard) Production Process by Dry Process:

- In order for the production of MDF, the chips derived from hardwoods and softwoods are classified and are turned into wood fibers after being steamed and processed by a defibrator.
- Then, these fibers are dried and mixed with additives next-generation hybrid glue (UFKT-37), paraffin, hardener and other chemicals.
- The fibers blended with binders and chemicals are dried up to 8 to 14% moisture, sorted out of the coarse chips and subjected to laying process.
- Following this process, the fiber layers formed during the pre-pressing process are compressed so that about half of the thickness is attained and leveled through edge trimming.
- In the following hot pressing step, the fibers and binding agents under high temperature and high pressure are fully combined and hardened, and formed into boards of desired thicknesses.
- In the final step if production, the hot-pressed boards are dimensioned, sanded and given a smooth surface.

The lignocellulosic materials are grouped into different classes based on their densities. Classification of Fiberboards by Density
- High Density MDF (HDF - High Density MDF) > 800 kg/m³
- Medium Density MDF (Medium Density MDF) 650 -800 kg/m³
- Low Density MDF (LDF - Low Density MDF) <650 -550 kg/m³
- Ultra-Low Density MDF (ULDF - Ultra Low Density MDF) < 550 kg/m³

### CB (chipboard) Production Process:

- In order for the production of chipboard, the wooden raw material is chipped in the chipper based on their classifications and the resulting chips are classified.
- The disc is grouped into macro and micro classes in the sieve and flaked in the flaker.
- The wet flakes resulting from the process are dried up to 1,5% moisture and are divided into four fractions in the sieve, including oversize, CL, SL and fine flakes.
- The oversize flakes are re-fined and taken to the production phase whereas the CL flakes are sent to macro dry hopper to form the medium layer of the chipboard, the SL flakes are sent to macro hopper to form the surface layers of the board and the fine flakes are sent to dust hopper for burning.
- Once the CL and SL dry flakes are mixed with resin (UFKT-37) binders and chemicals in separate blenders, they are laid in the layer. Afterwards, they are passed through the pre-press zone, processed in the hot press and, then, formed into a structure with the desired thickness.
- They are taken to the interim store following the acclimatization and dimensioning processes.
- Following the sanding process, they are classified by their qualities and made ready for dispatch.

### Urea Formaldehyde Resin Production Process (F:U molar ratio 1,5 - 0,6:1)

- The aqueous formaldehyde solution with a 35 to 55% concentration is charged into the reactor (Formaldehyde temperature: 50-60 °C, pH: 3 to 4). The sodium hydroxide (46 to 48%) and pH is brought to the range of 7 to 8,50.
- In addition to the formaldehyde solution, the urea is charged into the reactor in a way to obtain urea with an initial formaldehyde/urea molar ratio of 2-3:1. The temperature decreases from 50 to 60 °C to 30 to 40 °C. The pH reaches to the level of 8-8,5.
- The heating process of the reactor is started using the steam generated in its coils. Once the temperature of the reactor reaches 70 to 75°C in 15 to 25 minutes, the reactor is switched off. 10 minutes later, its temperature automatically rises from 70-75°C to 80-85°C and a pH value of 6,7 to 7,2 is attained.
- The pH is first adjusted to 5-5,40 in 80 to 85 °C with the aqueous formic acid that has a 15 to 20% concentration.
- 5 minutes later, the reactor temperature attains to 96-99°C. After waiting for 5 minutes, the coolers are activated. The mixture is kept at a temperature of about 96°C. The acidity is adjusted to the pH: 4,3-4,8 range with aqueous formic acid.
- At about 96°C, the reaction is followed up. The viscosity of the mixture attains to a value of 20-45 cps at 20 °C.
- Within 25 to 35 minutes after the viscosity reaches to a value of 20-45 cps at 20 °C, the reaction is terminated by adjusting the pH value to 7-7,8 using Sodium Hydroxide once the viscosity reaches to 50-280 cps at 20 °C depending on the desired glue layer value.
- The mixture is left to cool down by vacuum. The mixture is cooled down from 96°C to 38-45°C by means of the heat exchanger and then taken out of the vacuum (the vacuum process may take 40 to 65 minutes).
- The Formaldehyde:Urea molar ratio is adjusted to 1,50-0,6:1 by adding a second charge urea.
- The temperature of the glue in the reactor is adjusted to 20-35°C and the glue is pumped to the storage tank. The final viscosity is adjusted by adding or removing water in a way to attain 35-500 cps at 20 °C depending on the glue rigidity to be obtained.

After the total formaldehyde calculated based on the Formaldehyde:Urea initial molar ratio (F:U molar ratio 2-3:1) is taken into the reactor, the total urea to be taken into the reactor in order to achieve the desired final molar ratio can be charged to the reactor in 2, 3, 4 or more stages. In case that the final stiffness of the produced glue is required to have a low concentration, water can be added in accordance with the prescription or when otherwise required, the calculated amount of water can be taken out of the reactor during vacuum cooling.

Whereas the free formaldehyde content allowed in MDF and CB products was recognized as E2≤30 mg/100gr and >0,124 mg/m³ outdoor standard in the last decade, the values E1≤8 mg/100gr and outdoor ≤0,124 mg/m³ are accepted today. The outdoor free formaldehyde is analyzed according to the TE EN 120 perforator and TS EN 717-1 chamber methods. E0<0,062 mg/m³ is analyzed according to the TS EN 717-1 chamber method and is recognized as the allowable free formaldehyde standard. The acceptable free formaldehyde emissions in wood-based panel products has steadily declined over the past decade. Especially in recent years, the consumers of wood-based industrial panels prefer E0, E1, CARB1, CARB2 products which are free of toxic substances. The CARB criteria in MDF and CB composite products are shown in Table 1. The government officials enact legislative regulations on the said standards and the application of these standards are made compulsory.

**Table 1: CARB Criteria in MDF and CB Composite Products**

| CARB CLASSIFICATION (PV- EN 120) | | |
|---|---|---|
| PRODUCTION | CARB 1 | CARB-2 |
| | [ 07/2009] (mg/100 gr) | [07/2012] (mg/100 gr) |
| CB | 8 | 4 |
| MDF | 10 | 5 |
| fine MDF | 10 | 6 |

The next-generation hybrid resin product synthesized in order to manufacture products at desired free formaldehyde emissions in wooden board production without changing the process conditions and by using the next generation resin developed in the resin manufacturing process in consequence of the studies conducted by the inventor has taken its place as an alternative in board manufacturing.
Figure 1 MDF (medium density fiberboard) process workflow
Figure 2 CB (chipboard) process workflow
Figure 3 Glue unit urea formaldehyde process workflow

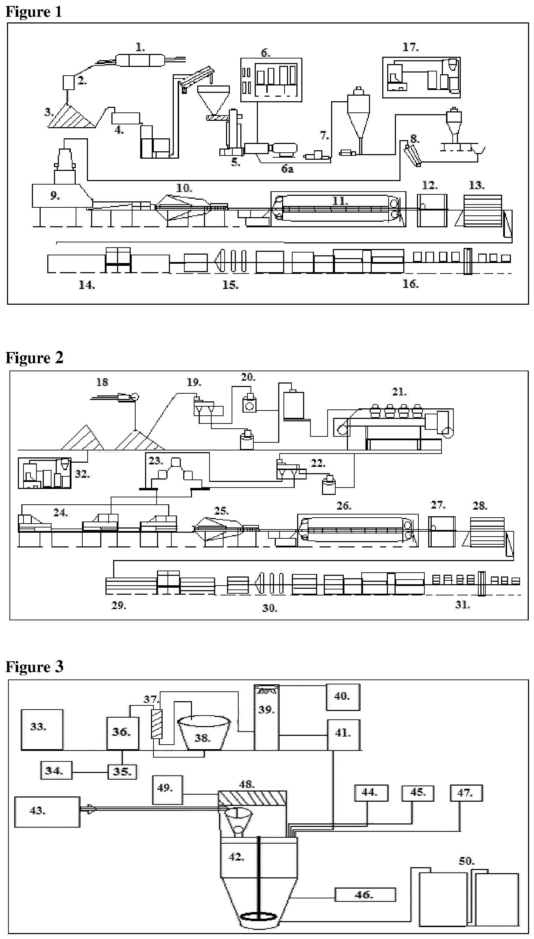

### Description of Process Workflows of Figure 1, Figure 2 and Figure 3

**1-** Debarker
**2-** Chipper
**3-** Chip Storage
**4-** Sieve
**5-** Refiner-Defibrator
**6-** Solution Tank (UFKT-37 Resin, Liquid Paraffin, Hardener and Other Chemicals)
   **6a** Feeding Line (blow line-gluing) (transfer of fiber to drying line and the unit where the chemicals are added)
**7-** Dryer
**8-** Fiber shifter
**9-** Laying Station
**10-** Pre-press
**11-** Hot Press
**12-** Dimensioning
**13-** Acclimatization
**14-** Interim Store (Lukki Storage)
**15-** Sander
**16-** Packaging
**17-** Energy
**18-** Chipper-Chip Storage
**19-** Chip Sieving
**20-** Flaking
**21-** Flake Drying
**22-** Flake Sieving
**23-** Flake Gluing (UFKT-37 Resin, Liquid Paraffin, Hardener and Other Chemicals)
**24-** Laying Station
**25-** Pre-press
**26-** Hot Press
**27-** Dimensioning
**28-** Acclimatization
**29-** Interim Store
**30-** Sander
**31-** Storage
**32-** Energy Unit
**33-** Methanol tank
**34-** Fresh Air Fan
**35-** Blower
**36-** Methanol Vaporization Evaporator
**37-** Heat Exchanger
**38-** Formaldehyde Reactor (Catalyzer)
**39-** Aqueous Formaldehyde Solution (absorption column)
**40-** Process Water Tank
**41-** Formaldehyde Storage tank
**42-** Resin Reactor
**43-** Urea Storage Area
**44-** Base Tank
**45-** Acid Tank
**46-** Steam inlet Unit (resin reactor heating)
**47-** Other Chemical Additives
**48-** Heat Exchanger (reactor cooling)
**49-** Vacuum Water Tank
**50-** Resin Storage tank

### DETAILED DESCRIPTION OF INVENTION

A wood-based composite board products comprises copolymer resin that contains polyflavonoid, amino groups, urea and formaldehyde. The copolymer resin comprises:
- formaldehyde at a weight ratio of 25-40%,
- sum of urea, and amino groups at a weight ratio 55-75%,
- polyflavonoid at a weight ratio 1-12% in solid form.

The wood-based composite products are chipboards (CB), medium density fiberboards (MDF), high density fiberboards (HDF) and oriented strand boards (OSB).

The said free formaldehyde emission is below the CARB2 5 mg free formaldehyde/100g (composite board) value for MDF and HDF, the CARB2 4 mg free formaldehyde/100g (composite board) value for CB and the E0 3mg free formaldehyde/100g (composite board) value for MDF-HDF and CP according to the TS EN 120 and TSEN 717-1 measurement methods.

In one of the embodiment of the invention, the resin used in the production process of these wood-based composite products involves the following stages of processes:
a. The aqueous formaldehyde solution is charged into the reactor, and sodium hydroxide solution is added,
b. The first part of urea is charged into the reactor, and pH is adjusted to 7-9,
c. The mixture is heated up to 100 °C, and pH is maintained between 4-6,
d. At the end of the polymerization, pH of the mixture is adjusted to 7-8 with sodium hydroxide,
e. Aqueous polyflavonoid solution at an increased temperatures is added to the reactor in a few charges, and pH is adjusted to 7-8,5,
f. The second part of urea is charged, and pH is adjusted to 6,5-9,
g. It is stirred until the polymerization reaction is terminated and then stored.

In one of the embodiment of the invention, the resin used in the production process of these wood-based composite products involves the following stages of processes:
a. The aqueous formaldehyde solution is charged into the reactor, and pH is adjusted to 7,0-8,5 with sodium hydroxide,
b. The first part of urea is charged into the reactor so that the initial formaldehyde urea molar ratio becomes 1,7-3,0, and pH is adjusted to 7-9,
c. The mixture is heated up to 100 °C, and pH is maintained between 4-6,
d. At the end of the polymerization, pH of the mixture is adjusted to 7-8,5 with sodium hydroxide,
e. 1-12% solid polyflavonoid is charged into the final product of the cooled resin solution, and pH of the final solution is adjusted to 7-8,5 with stabilizers,
f. The second part of urea is added as 0,8-1,3 into the reactor in a way that the final product resin urea formaldehyde molar ratio becomes 0,6-1,5, and pH is adjusted to 6,5-9,
g. Viscosity of the final product is adjusted to 55-300 cps at room temperature,
h. It is stirred until the polymerization reaction is terminated and then stored.

The final product resin contains 25-40% formaldehyde, 55-75% urea, 1-12% polyflavonoid.

In one of the embodiment of the invention, the wood-based composite board product that is medium density fiberboard (MDF) has the following steps of processes:
a. Chipping of the raw wood,
b. Baking of the chips at 180-200 °C in steam at the refiner unit, addition of paraffin and fiberization,
c. Addition of the urea formaldehyde polyflavonoid copolymer resin onto the fibers,
d. Drying of the fibers up to a humidity rate of 8-14%,
e. Laying of the fibers and preparation of the board outline,
f. Finalization of boards through pressing under heat and pressure.

In one of the embodiment of the invention, the production process of the medium density fiberboard (MDF) has the following steps of processes:
a. Baking of the chips under 6-10 bar steam pressure at between 180-200 °C at the refiner unit, addition of paraffin and fiberization.
b. Addition of the said urea formaldehyde polyflavonoid copolymer resin solution onto the fibers by spraying using the ecoresinator,
c. Laying of the fibers and preparing the board design, and pre-heating for packaging.

In one of the embodiment of the invention, the production process of the wood-based composite board product has the following steps of processes:
a. Chipping of the raw wood,
b. Flaking and drying of them up to 1-2% of humidity,
c. Addition of the urea formaldehyde polyflavonoid copolymer resin onto the flakes,
d. Laying of the surface-layer and core-layer flakes and pre-pressing,
e. Finalization of boards through pressing under heat and pressure.

In one of the embodiment of the invention, the production process of the wood-based composite board product has the following steps of processes:
a. Chipping of the raw wood,
b. Flaking of them at the flaker unit and drying of them up to 1,5% of humidity,
c. Addition of the urea formaldehyde polyflavonoid copolymer resin according to onto the flakes in the blender,
d. Laying of the surface-layer and core-layer flakes and pre-pressing,
e. Finalization of boards through pressing under heat and pressure.

In the studies conducted to accomplish the purposes of the invention, the production of boards with the resin in question substituted for the normal urea formaldehyde glue without changing the process conditions in the MDF and CB production within the production of wood-based boards is made based on the process workflows given in the Figure 1 and Figure 2 described above.

The structural and characteristic features of the invention and all the advantages brought by the invention are provided in the tables and figures attached and are described in detail by making reference to these figures.

The standard urea-formaldehyde resin used in the forest products industry which can be produced in various molar ratios is labile to hydrolysis and is easily influenced by water vapor during the production process. Thus, the N-C bond to which the methylol (CH2OH) groups are bound is easily separated and, also, the ether and methyl bonds resulting from the reaction becomes unstable. Since therefore, the urea-formaldehyde structure undergoes hydrolysis under hot press and pressure during the production of the board and in the final thermosetting reaction phase of the urea formaldehyde, the free formaldehyde is released into the ambient air and the geometrically rigid structure of the resin is deformed. And this leads to a decrease in the physical and mechanical strength values of the final board product and an increase in the product's free formaldehyde value.

The preferred structurings in the MDF, CB and wood-based panel production methods using the polymeric compounds and derivatives of the polyflavonoid in the present invention and the condensation product next-generation hybrid resin synthesized by the generation of urea formaldehyde resin are described to ensure a good understanding regarding the subject in a way not to create any limiting effect.

The next-generation resin in question which is synthesized with the ordinary urea formaldehyde resin in the wood-based board production ensures both the production of boards in E0, E1, CARB1, CARB2 standards during the processes and an increase in the capacity.

Up until now, no studies have been conducted on the extraction of urea formaldehyde resin using polyflavonoid-containing polymeric organic agents in the forest products industry, the said resin synthesizing process steps, application methods or the production of wood-based composite products with low free formaldehyde emission.

Due to the complex structure and characteristics of the polyflavonoids, including derivatives of polymeric organic compounds, which are the subject matter of the invention and based on the structure of this compound, the next-generation hybrid product shall be referred to as Urea Formaldehyde Kastamonu Entegre Glue-37 (UFKT-37) below.

Owing to the facts that the boards produced using the next-generation hybrid resin (UFKT-37) in the forest products and board industry have high physical and mechanical properties and that the free formaldehyde value of these products are at a level equal to that of the untreated natural wood, the invention makes an important contribution to the forest products industry.

The urea-formaldehyde resin currently used in the forest products industry leads to a break-off of the bond between Nitrogen and Carbon while the thermosetting structure of the resin is formed under heat and pressure during the formation of the boards under the hot press, and since this break-off occurs in the ether and methyl bridges, this reaction causes the release of the free formaldehyde due to its inclusion in the methylol (-CH2OH) group. Thus, the methylol groups which are supposed to increase the strength of the resin through bonding are broken off and turned into free formaldehyde. Therefore, the resin's inability to maintain its rigid structure leads to undesirable conditions such as a decrease in its strength or release of the free formaldehyde.

In Formula X, methylene bridge bonds are formed during the reaction of flavonoid compounds with first the (OH) group in A-ring structure and then the formaldehyde (HCHO) group. Due to the chemical and geometric structure of flavonoid compounds, the polymerization takes place much more rapidly than that of the synthetic compounds such as resorcinol. Owing to their reactive properties, length and branched geometrical structure, the flavonoid compounds rapidly generate a methylene bridge form with their low formaldehyde concentration. Therefore, the resin has a structure that is stable and resistant against extraneous effects. According to the present invention, the polyflavonoid compounds constitute a potential source due to the facts that these compounds are natural, are more affordable compared to the melamine and can be used in the production of wood-based composite boards with low free formaldehyde emission. As can be seen in Formula Y, the compounds are activated by the active A-ring in the long and wavy-shaped molecular structure (Figure X) and form methylene bridges very rapidly owing to its urea formaldehyde form.

Due to the high reactivity of the polyflavonoid compounds, the free formaldehyde in the environment enters into reaction too rapidly during the curing of the final resin and, therefore, leads to a decrease in the free formaldehyde level of the final composite product.

As the percentage of the polyflavonoid polymeric compounds in the urea formaldehyde solution increases, the reaction continues due to high reactivity of the flavonoid polymeric with the free formaldehyde in the urea formaldehyde form. Accordingly, this increases its viscosity over time and shortens the shelf life of the said glue. Accordingly, as the latency time of the resin form lengthens out and the level of formaldehyde in the resin form drops off, the adhesiveness of the resin goes down and, thus, problems are encountered in gluing during the production of wood-based composite products. In the production of wood-based composite products, therefore, the resins in question are recommended to be used within a short time after their synthesis.

In the production of all wood-based composite boards for indoor use, the urea formaldehyde resin is used as the cross-linking agent. Therefore, we especially preferred to use urea formaldehyde resin in our invention. The urea has a granular form. For this purpose, the amino compounds are very suitable for mono-methylol urea and dimethylol urea monomeric urea formaldehyde production. On the other hand, the compounds entering into the synthesis in the reaction steps (amino compounds, formaldehyde, poly flavonoids, stabilizers) must be properly selected. Therefore, these factors influence the shelf life and reactivity of the final resin in question.

In the present invention, the formaldehyde from the aldehyde group was added to the reaction. Through addition of urea into the reaction, the urea formaldehyde resin is composed and the resin in question is synthesized with copolymer by adding polyflavonol polymeric compounds into the reaction in order to strengthen the composition of the urea formaldehyde.

The formation method and steps of the resin composition of the present invention are shown in Figure 3, and the formation steps are described in detail below.

### PRODUCTION OF INVENTION AND ITS APPLICATION IN THE WOOD-BASED BOARD INDUSTRY

### Production of the HDF-MDF (medium density fiberboard) in Figure 1 according to the Process Workflow using the Resin of the Present Invention

The wooden raw material (lignocellulosic) is debarked in the debarker (1) and, then, chipped in the chipper (2). The chips are sieved in the mechanical sieve (3). The chips then taken into the chip bin and are suberized in the chip bin (4). The suberized chips are taken into the digester by means of refiner plug screw. There, the chips are scoured for about 3 to 6 minutes at 6 to 10 bar steam pressure and at 180°C to 200°C in the refiner scouring boiler in the refiner unit (5). The suberized chips are fiberized in the refiner-defibrator (5). Then the suberized chips are given, in spray form, liquid paraffin prior to fiberization and hardener solution (6) after they are fiberized. The resin (UFKT-37) and chemicals in question are sprayed onto the fibers in the ecoresinator blowline steam line (60) from the reserve tank by means of pumps. The fibers containing urea formaldehyde are taken into the dryer (7) and, there, dried up to 8%-14% of moisture content. Following the drying process, the non-standard fiber and resin residues are secluded from the standard fibers through pneumatic sieving procedure in the fiber shifter (8). After the fiber shifter procedure, they pass through the laying station (9), the board outline is formed, and the boards are composed through pressing in the pre-press unit (10). The boards produced using the aforesaid resin under heat and pressure in the hot press (11) unit are kept for several days following the dimensioning (12) process. In the meanwhile, the boards are conditioned in the acclimatization unit (13). The boards are taken to the interim storage (14) area. At the end of this process, the dead parts in the upper and lower surfaces of the boards are passed through sanding process (15) using the sand belts with sand number 50-60-80-100-120-150, and the final product, medium density fiberboard (MDF), is obtained following the quality control process. These products are packaged (16) and made ready for dispatching.

### Production of the CB (chipboard) in Figure 2 according to the Process Workflow using the Resin of the Present Invention

The wooden raw material is chipped in the chipper (18) based on its classification and, then, the chips are stored according to their classes. The disc is classified as the macro and micro main classes (19). The classified chips are flaked in the flakers (20) and then taken into the hoppers. The wet chips resulting from the process are sent to the hoppers and dried up to 1,5% of moisture content (21). The dried flakes are grouped into four fractions (22) as oversize, CL, SL ve fine in the sieves. The oversize chips are re-fined and taken to the production phase. The CL chips are sent to macro dry hopper to form the medium layer of the chipboard, the SL chips are sent to macro hopper to form the surface layers of the board and the fine chips are sent to dust hopper for burning. The CL and SL dry flakes are mixed with UFKT-37 resin and other chemicals (23) in separate blenders. The glued flakes are sent to the layer machine to form the CL and SL layers of the chipboard and the laying process (24) is performed. Afterwards, they are passed through the pre-press zone (25). In the hot pressing process, the chipboard outline is formed into the desired thickness (26) under heat and pressure within the board formation time depending on the dimensions of the produced board. The edges of the boards which passed through the pressing process are cleaned off (27). The boards are brought to the desired temperature during the acclimatization process (28), and then, dimensioned and taken to the interim store (29). Once the boards kept in the store attain the equilibrium moisture, they are sanded (sand belt with sand no. 50-80-120) (30), classified based on their qualities, packaged and made ready for dispatching in the storage area (31).

The wood-based composite MDF and CB products produced using the resin in question are subjected to physical, mechanical and free formaldehyde test analysis. These analyses are performed in accordance with the methods of thickness (as sanded) TS EN 324-1, density (raw) TS EN 323, density (as sanded) TS EN 323, tensile strength TS EN 319, flexural strength TS EN 310, elastic modulus TS EN 310, moisture TS EN 322, surface durability TS EN 311, surface absorption TS EN 382, swelling (24h - TSEN 13329), swelling (2 h -TSEN 317), water intake (24h - TSEN 317), free formaldehyde perforator (EN 120) and free formaldehyde chamber (EN 717-1).

### Production of the Resin (UFKT-37) of the Present Invention according to the Urea Formaldehyde Process Workflow in the Resin Unit in Figure 3

The methanol -methyl alcohol- is a liquid organic compound represented by formula CH3OH, which is clear, free of impurities in suspension form and can be mixed with water in any ratio. Even a very small amount of methanol is toxic for living organisms. The methanol is also highly toxic to humans, this compound is the main raw material of formaldehyde synthesis and is stored in a specially-designed storage tank (33) during the resin production process. By means of the fresh air fan (34), the oxygen in the air is blended with the formaldehyde-containing flue gas coming from the absorption column in the blower (35) and then sent to the methanol evaporator (36). The methanol and the oxygen-rich formaldehyde-containing flue gas from the blower are combined in the evaporator. Then the methanol is evaporated by the nozzle in the evaporator. The temperature of the evaporated methanol rises from 45°C to 170°C through heat exchange in the heat exchanger (37) one side of which one side of which carries formaldehyde gas while methanol steam passes through the other side, and the methanol enters from the bottom into the formaldehyde reactor (38) containing (molybdenum-based) catalyst in it. In the formaldehyde reactor, the methanol is transformed into formaldehyde gas through oxidation reaction and by means of the catalyst. During the reaction, the temperature rises to 340 °C and the temperature of the reactor is stabilized with sodium nitrite-containing salt. The resulting formaldehyde gas (290 °C) is transmitted to the cooling heat exchanger over the upper part of the reactor (37) (the methanol steam passes through the one side of the reactor while formaldehyde gas passes through the other side) where the temperature of the formaldehyde gas falls from 290°C to 160°C. The formaldehyde gas exiting from the heat exchanger enters into the absorption column (39) over the bottom part. Then the formaldehyde gas is transformed into an aqueous solution of 35 to 55% through softened water supply from the process water tank (40), over the top of the absorption column. The aqueous formaldehyde solution formed at the bottom of the absorption column is stored formaldehyde storage tank (41) at a temperature of 50 to 60°C. In order to produce a urea formaldehyde at a desired solid material and molar ratio, the aqueous formaldehyde solution is sent to the resin reactor (42). The urea is taken from the storage area (43) and transferred to (charged into) the resin reactor by means of the conveyor belts. The solution is reinforced with base (44) in order to attain the desired pH value. Depending on the polymer formation steps of the reaction, acid (45) is added to regulate the pH value. In order to increase the polymer degree of the solution, the reactor is heated through a steam intake (46) from the bottom part of the reactor. Based on the reaction stages, other chemical additives (47) are added. Once the solution in the reactor attains the desired polymer degree, the solution is cooled in the water vapor exchanger unit. Depending on the desired solid material ratio, the water vapor cooled in the exchanger is either sent back to the reactor or taken into the vacuum water tank (49). The resin produced at the desired solid material and molar ration in the reactor and analyzed in the laboratory is sent to the resin storage tank (50) for storage purposes.

The test analyzes of the resin produced in the resin process are performed according to the analysis methods of final resin pH (TS 3263), density (TS 1724), viscosity (TS 6126), resin solid material (TS 3891), free formaldehyde (TS 12009), gelation time (TS 12009) and glue shelf life (TS 12009).

The content of the resin composition of the invention is composed of
- Polyflavanoid and derivative biopolymeric compounds
- Amino compounds
- Aldehyde compounds
- Stabilizers.

The molecular weights of the compounds in the composition are approximately as folows: polyflavonoids 500-20000, amino compounds, urea 60 and formaldehyde 30.

### Sample-1

### Production of 65% UFKT-37 Resin (Urea: Formaldehyde: Polyflavonoid) with a molar ratio of F:U+P 1,07

1. Based on the resin process workflow in Figure 3 and the recipe calculated for F:U 1,07 mole production, 18.036,0 kg of aqueous formaldehyde solution with a concentration of 40 to 50% is charged into the reactor (formaldehyde temperature: 58 °C, pH: 3,5). The pH is adjusted to 7-8 using sodium hydroxide (NaOH: 46%).
2. 7,857.0 kg of urea is charged onto the formaldehyde solution in the reactor (in a way to obtain a formaldehyde: urea molar ratio of 2.1). The mixture temperature is adjusted to 35 to 45 °C and the pH is adjusted to 7-8,5.
3. The reactor is heated by the steam generated in its coils. Within about 30 minutes, the heating is turned off and the temperature rises to 80-85 °C due to the exothermic reaction while the pH is 6,5-7.
4. The resin solution is slowly adjusted from 80°C to a pH value of 4-5 and to a temperature of about 100 °C using formic acid.
5. At about 100°C, the reaction is followed up. The viscosity of the mixture attains to 30-45 cps within 20 to 30 minutes.
6. Then the viscosity of the resin solution is escalated to 55-70 cps within 20 to 30 minutes. The pH of the mixture is then adjusted to 7-8 using sodium hydroxide, and the reaction is terminated.
7. The solution is left to cool down using vacuum. In the meanwhile, 4.000,0 kg of water is taken out of the reactor by means of the exchanger -through vacuuming and then the mixture is cooled from 100°C down to a suitable temperature below 60 °C, and the vacuum is disabled (vacuum time: approximately 120 to 180 minutes).
8. The resin solution left to cool down and the polyflavonoid polymeric compound at a ratio of 1 to 12% are charged into the reactor at temperatures of about 60 °C and during the different steps. During the step before the final reaction, the pH value is adjusted to 8.
9. When the polyflavonid addition process is over, the 2^{nd} part urea (7.163,0 kg) is gradually charged into the reactor.
10. When the 2^{nd} urea is completely charged into the reactor; its pH is adjusted to 8,0 by means of stabilizers at the low temperature of the final reaction of the mixture.
11. The resin mixture of the invention is stirred for 75-90 minutes, and its pH is controlled. If necessary, the pH is adjusted to 8,0-9,5 with stabilizers. After that, it is transferred to the resin storage tank with a pump at room temperature. The final viscosity is measured as 250-300 cps at room temperature.

### Sample-2

### Production of 58% UFKT-37 Resin with a molar ratio of F:U+P 0,98

1. Based on the resin process workflow in Figure 3 and the recipe calculated for F:U 0,98 mole production, 15.317,0 kg of aqueous formaldehyde solution with a concentration of 40 to 50% is charged into the reactor (formaldehyde temperature: 58 °C, pH: 3,5). The pH is adjusted to 7-8 using sodium hydroxide (NaOH: 46%).
2. 6.667,0 kg of urea is charged onto the formaldehyde solution in the reactor (in a way to obtain a formaldehyde: urea molar ratio of 2,1). The mixture temperature is adjusted to 35 to 45 °C and the pH is adjusted to 7-8,5.
3. The reactor is heated by the steam generated in its coils. Within about 30 minutes, the heating is turned off and the temperature rises to 80-85 °C due to the exothermic reaction while the pH is 6,5-7.
4. The resin solution is slowly adjusted from 80°C to a pH value of 4-5 and to a temperature of about 100 °C using formic acid.
5. While the resin in the reactor reaches to a temperature of about 100°C, the reaction is followed up. The viscosity of the mixture attains to 30-45 cps within 20 to 30 minutes.
6. Then the viscosity of the resin solution in the reactor is escalated to 55-70 cps within 20 to 30 minutes. The pH of the mixture is then adjusted to 7-8 using sodium hydroxide, and the reaction is terminated.
7. The solution is left to cool down using vacuum. The mixture is cooled from 100°C down to a suitable temperature below 60 °C, and the vacuum is disabled (vacuum time: approximately 120 to 180 minutes).
8. The resin solution left to cool down and the polyflavonoid polymeric compound at a ratio of 1 to 12% are charged into the reactor at temperatures of about 60 °C and during the different steps. During the step before the final reaction, the pH value is adjusted to 8,0.
9. When the polyflavonid addition process is over, the 2^{nd} part urea (7.243,0 kg) is gradually charged into the reactor.
10. When the 2^{nd} urea is completely charged into the reactor; its pH is adjusted to 8,0 by means of stabilizes at the low temperature of the final reaction of the mixture.
11. The resin mixture of the invention is stirred for 75-90 minutes, and its pH is controlled. If necessary, the pH is adjusted to 8,0-9,5 with stabilizers. After that, it is transferred to the resin storage tank with a pump at room temperature. The final viscosity is measured as 55-90 cps at room temperature.

### Sample-3

### Production of 58% UFKT-37 Resin with a molar ratio of F:U+P 0,90

1. Based on the resin process workflow in Figure 3 and the recipe calculated for F:U 0,90 mole production, 14.633,0 kg of aqueous formaldehyde solution with a concentration of 40 to 50% is charged into the reactor (formaldehyde temperature: 58 °C, pH: 3,5). The pH is adjusted to 7-8 using sodium hydroxide (NaOH: 46%).
2. 6.190,0 kg of urea is charged onto the formaldehyde solution in the reactor (in a way to obtain a formaldehyde: urea molar ratio of 2,1). The mixture temperature is adjusted to 35 to 45 °C and the pH is adjusted to 7-8,5.
3. The reactor is heated by the steam generated in its coils. Within 30 minutes, the heating is turned off and the temperature rises to 80-85 °C due to the exothermic reaction while the pH is 6,5-7.
4. The resin solution is slowly adjusted from 80°C to a pH value of 4-5 and to a temperature of about 100 °C using formic acid.
5. While the resin in the reactor reaches to a temperature of about 100°C, the reaction is followed up. The viscosity of the mixture attains to 30-45 cps after 20 to 30 minutes.
6. Then the viscosity of the resin solution in the reactor is escalated to 55-70 cps within 20 to 30 minutes. The pH of the mixture is then adjusted to 7-8 using sodium hydroxide, and the reaction is terminated.
7. The resin mixture in the reactor is left to cool down using vacuum. The mixture is cooled from 100°C down to a suitable temperature below 60 °C, and the vacuum is disabled (vacuum time: approximately 40 to 80 minutes)
8. The resin solution left to cool down and the polyflavonoid polymeric compound at a ratio of 1 to 12% are charged into the reactor at temperatures of about 60 °C and during the different steps. During the step before the final reaction, the pH value is adjusted to 8,0.
9. When the polyflavonid addition process is over, the 2^{nd} part urea (7.879,0 kg) is gradually charged into the reactor.
10. When the 2^{nd} urea is completely charged into the reactor; its pH is adjusted to 8,0 by means of stabilizers at the low temperature of the final reaction of the mixture.
11. The resin mixture of the invention is stirred for 75-90 minutes, and its pH is controlled. If necessary, the pH is adjusted to 8,0-9,5 with stabilizers. After that, it is transferred to the resin storage tank with a pump at room temperature. The final viscosity is measured as 55-90 cps at room temperature.

### Sample-4

### Production of 58% UFKT-37 Resin with a molar ratio of F:U+P 0,84

1. Based on the resin process workflow in Figure 3 and the recipe calculated for F:U 0,84 mole production, 14.285,0 kg of aqueous formaldehyde solution with a concentration of 40 to 50% is charged into the reactor (formaldehyde temperature: 58 °C, pH: 3,5). The pH is adjusted to 7-8 using sodium hydroxide (NaOH: 46%).
2. 6.190,0 kg of urea is charged onto the formaldehyde solution in the reactor (in a way to obtain a formaldehyde: urea molar ratio of 2,1). The mixture temperature is adjusted to 35 to 45 °C and the pH is adjusted to 7-8,5.
3. The reactor is heated by the steam generated in its coils. Within 30 minutes, the heating is turned off and the temperature rises to 80-85 °C due to the exothermic reaction while the pH is 6,5-7.
4. The resin solution is slowly adjusted from 80°C to a pH value of 4-5 and to a temperature of about 100 °C using formic acid.
5. While the resin in the reactor reaches to a temperature of about 100°C, the reaction is followed up. The viscosity of the mixture attains to 30-45 cps after 20 to 30 minutes.
6. Then the mixture viscosity of the resin solution in the reactor is escalated to 55-70 cps within 20 to 30 minutes. The pH of the mixture is then adjusted to 7-8 using sodium hydroxide, and the reaction is terminated.
7. The resin mixture in the reactor is left to cool down using vacuum. The mixture is cooled from 100°C down to a suitable temperature below 60 °C, and the vacuum is disabled (vacuum time: approximately 40 to 80 minutes).
8. The resin solution left to cool down and the polyflavonoid polymeric compound at a ratio of 1 to 12% are charged into the reactor at temperatures of about 60 °C and during the different steps. During the step before the final reaction, the pH value is adjusted to 8,0.
9. When the polyflavonid addition process is over, the 2^{nd} part urea (8.855,0 kg) is gradually charged into the reactor.
10. When the 2^{nd} urea is completely charged into the reactor; its pH is adjusted to 8,0 by means of stabilizers at the low temperature of the final reaction of the mixture.
11. The resin mixture of the invention is stirred for 75-90 minutes, and its pH is controlled. If necessary, the pH is adjusted to 8,0-9,5 with stabilizers. After that, it is transferred to the resin storage tank with a pump at room temperature. The final viscosity is measured as 55-90 cps at room temperature.

On the applicability of the four samples given; after the total amount of formaldehyde calculated according to initial formaldehyde:urea molar ratio (F:U molar ratio 2-3:1) is taken into the reactor, the total amount of urea required to be taken into the reactor in order to get the desired final molar ratio can be charged into the reactor at 2, 3, 4 or more levels. When the final solid of the produced glue is desired to have a low concentration, water can be added in accordance with the recipe. When it is desired to have a high concentration, the water calculated during vacuum-cooling can be taken out in accordance with the recipe. At the end of the vacuuming process, the ployflavonoid polymeric chemical compounds (with a concentration of 0,1-100%) can be charged into the reactor at 1, 2, 3, 4 or more stages.

### Comparison of the physical, mechanical and free formaldehyde emission values of the HDF-MDF boards produced using the UFKT-37 resin of the invention with a molar ratio of F:U+P 0,90 and using the standard UF resin with a molar ratio of F:U 1,17 (produced using the both resins)

In accordance with the process workflow in Figure 1;
The 7,71 mm-thick (TS EN 324-1) MDF-HDF reference board at a density of 871 kg/m³ (TS EN 323) produced at a press speed of 882 mm/s with the standard 93 kg resin (90% UF+10% catcher with a molar ratio of F:U 1,17) on a MDF press was measured and found to have a tensile strength of 1,49 N/mm² (TS EN 319), a bending strength of 40,95 N/mm² (TS EN 310), a spalling resistance of (24h TS EN 13329) 17,70 and free formaldehyde value of 14,96 mg/100g (composite board) (TS EN 120).

The 7,73 mm-thick (TS EN 324-1) MDF-HDF test board at a density of 872 kg/m³ (TS EN 323) produced at a press speed of 870 mm/s with UFKT-37 100 kg resin (with a molar ratio of F:U+P 0,90) on a MDF press was measured and found to have a tensile strength of 1,38 N/mm² (TS EN 319), a bending strength of 40,06 N/mm² (TS EN 310), a spalling resistance of (24h TS EN 13329) 17,80 and a free formaldehyde value of 6,78 mg/100g (composite board) (TS EN 120).

The 7,75 mm-thick (TS EN 324-1) MDF-HDF test board at a density of 873 kg/m³ (TS EN 323) produced at a press speed of 870 mm/s with UFKT-37 97 kg resin (with a molar ratio of F:U+P 0,90) on a MDF press was measured and found to have a tensile strength of 1,32 N/mm² (TS EN 319), a bending strength of 40,21 N/mm² (TS EN 310), a spalling resistance of (24h TS EN 13329) 17,86 and a free formaldehyde value of 6,07 mg/100g (composite board) (TS EN 120).

The 7,74 mm-thick (TS EN 324-1) HDF test board at a density of 874 kg/m³ (TS EN 323) produced at a press speed of 870 mm/s with UFKT-37 95 kg resin (with a molar ratio of F:U+P 0,90) on a MDF press was measured and found to have a tensile strength of 1,25 N/mm² (TS EN 319), a bending strength of 40,32 N/mm² (TS EN 310), a spalling resistance of (24h TS EN 13329) 17,88 and a free formaldehyde value of 4,92 mg/100g (composite board) (TS EN 120).

The mechanical and the physical test results of the 7,71 mm-thick HDF reference board (a compound produced from formaldehyde and urea and not containing polyflavonoid) produced at 882 mm/s press speed with standard 93 kg (90% UF+10% catcher with a molar ratio of F:U 1,17) resin, and the boards produced, without using the said resin and catcher chemical, with a solid resin consumption of 100-97-95 kg/m³ and at 870 mm/s press speed with the resin of the invention (UFKT-37) are measured between the acceptable limits according to the TS EN standards. Therefore, although there is a production with a consumption similar to the one of the standard UF resin of the invention at a press speed similar to the standard production, according to the test results, the test performance results of the boards produced with the resin of the invention are similar to those of the reference test results. It means that the resin of the invention allows for the production of the wood-based composite boards of the CARB1-CARB2 standards on Table 1.

The production cost of the resin of the invention named UFKT-37 is higher than the normal UF glue by 7-14%, and therefore the production cost resulting from the glue is reflected on the cost of m³ of HDF-MDF produced with UFKT-37 for the board production of the CARB1 and CARB2 standards.

### Comparison of the physical, mechanical and free formaldehyde emission values of the HDF-MDF boards produced with UFKT-37 resin of the invention with a molar ratio of F:U+P 0,98 and the standard UF resin with a molar ratio of F:U 1,17 (produced using the both resins)

In accordance with the process workflow in Figure 1;
The 7,72 mm-thick (TS EN 324-1) MDF-HDF reference board at a density of 870 kg/m³ (TS EN 323) produced at a press speed of 890 mm/s with standard 93 kg resin (90% UF+10% catcher with a molar ratio of F:U 1,17) on a MDF press was measured and found to have a tensile strength of 1,48 N/mm² (TS EN 319), a bending strength of 41,22 N/mm² (TS EN 310), a spalling resistance of (24h TS EN 13329) 17,60 and a free formaldehyde value of 14,70 mg/100g (composite board) (TS EN 120).

The 7,71 mm-thick (TS EN 324-1) HDF test board at a density of 873 kg/m³ (TS EN 323) produced at a press speed of 880 mm/s with 95 kg UFKT-37 resin (with a molar ratio of F:U+P 0,98) on a MDF press was measured and found to have a tensile strength of 1,36 N/mm² (TS EN 319), a bending strength of 40,26 N/mm² (TS EN 310), a spalling resistance of (24h TS EN 13329) 17,72 and a free formaldehyde value of 9,02 mg/100g (composite board) (TS EN 120).

As for the test results of the reference board produced with the standard urea formaldehyde (with a molar ratio of F:U:1,17) with the wood-based boards HDF-MDF produced with the resin of the invention (UFKT-37) F:U+P 0,98, the test performances of the boards produced with the resin of the invention are similar to those of the reference boards' test results. All of the physical and mechanical test results of the boards are between the acceptable limits according to the standards of TS EN.

### Comparison of the physical, mechanical and free formaldehyde emission values of the HDF-MDF boards produced with the UFKT-37 resin of the invention with a molar ratio of F:U+P 0,84 and the standard UF resin with a molar ratio of F:U 1,17 (produced using the both resins)

In accordance with the Figure 1 process workflow;
The 17,92 mm-thick (TS EN 324-1) MDF reference board at a density of 732 kg/m³ (TS EN 323) produced at a press speed of 340 mm/s with standard 95 kg resin (90% UF+10% catcher with a molar ratio of F:U 1,17) on a MDF press was measured and found to have a tensile strength of 0,86 N/mm² (TS EN 319), a bending strength of 30,20 N/mm² (TS EN 310), a spalling resistance of (24h TS EN 13329) 6,50% and a free formaldehyde value of 16,75 mg/100g (composite board) (TS EN 120).

The 17,94 mm-thick (TS EN 324-1) MDF test board at a density of 730 kg/m³ (TS EN 323) produced at a press speed of 340 mm/s with 102 kg UFKT-37 resin (with a molar ratio of F:U+P 0,84) on a MDF press was measured and found to have a tensile strength of 0,72 N/mm² (TS EN 319), a bending strength of 28,20 N/mm² (TS EN 310), a spalling resistance of (24h TS EN 13329) 6,80% and a free formaldehyde value of 2,94 mg/100g (composite board) (TS EN 120).

As for the test results of the reference board produced with the standard urea formaldehyde (with a molar ratio of F:U:1,17) and the wood-based boards HDF-MDF produced with the resin of the invention (UFKT-37) F:U+P 0,84, the test performances of the boards produced with the resin of the invention are similar to those of the reference boards. All of the physical and mechanical test results of the boards are between the acceptable limits according to the TS EN standards.

Therefore, the resin of the invention (TS EN 120) allows for the production of wood-based composite boards conforming to the E0 standards. According to the 2,94 mg/100g (composite board) (TS EN 120) test result, the resin of the invention allows for the production of MDF-HDF conforming to the E0 standards.

Due to the production costs of the resin of the invention, it increases the production costs of the HDF-MDF boards by 8-16% according to the standard UF glue in order to reach E0 free formaldehyde values during the HDF-MDF production.

### Comparison of the physical, mechanical and free formaldehyde emission values of the HDF-MDF boards produced with UFKT-37 resin of the invention with a molar ratio of F:U+P 0,98 and the standard UF resin with a molar ratio of F:U 0,98 (produced using the both resins)

In accordance with the process workflow in Figure 1;
The 7,73 mm-thick (TS EN 324-1) HDF reference board at a density of 874 kg/m³ (TS EN 323) produced at a press speed of 882 mm/s with standard 98 kg resin (UF with a molar ratio of F:U 0,98) on a MDF press was measured and found to have a tensile strength of 1,36 N/mm² (TS EN 319), a bending strength of 40,24 N/mm² (TS EN 310), a spalling resistance of (24h TS EN 13329) 18,80% and a free formaldehyde value of 9,24 mg/100g (composite board) (TS EN 120).

The 7,72 mm-thick (TS EN 324-1) HDF test board at a density of 875 kg/m³ (TS EN 323) produced at a press speed of 882 mm/s with 95 kg UFKT-37 resin (with a molar ratio of F:U+P 0,98) on a MDF press was measured and found to have a tensile strength of 1,38 N/mm² (TS EN 319), a bending strength of 40,26 N/mm² (TS EN 310), a spalling resistance of (24h TS EN 13329) 17,82% and a free formaldehyde value of 8,74 mg/100g (composite board) (TS EN 120).

The physical, mechanical and formaldehyde value performances of the wood-based composite boards (MDF-HDF) produced at the same molar ratio of F:U+P 0,98 and at the same press speed as the standard urea formaldehyde resins are illustrated. All of the physical and mechanical test results of the HDF-MDF boards produced with the resin of the invention are between the acceptable limits according to the TS EN standards. The spalling resistance (24h) of the boards produced with the standard urea formaldehyde (UF with a molar ratio of F:U 0,98) is between the acceptable limits according to the relevant standards.

Due to the production costs of the resin of the invention (UFKT-37) resulting during the production of HDF-MDF, it increases the production costs of the HDF-MDF boards by about 6-10% according to the standard UF glue in order to reach the CARB1 free formaldehyde values.

### Comparison of the physical, mechanical and free formaldehyde emission values of the chipboards produced with the resin of the invention with a molar ratio of F:U+P SL;0,98 and CL;1,07 and the standard UF resin with a molar ratio of F:U SL;1,14 and CL;1,20 (produced using the both resins)

In accordance with the process workflow in Figure 2;
The tensile strength of the 17,9 mm thick (TS EN 324-1) PB reference board at the concentration of 622 kg/m³ (TS EN 323) produced at a press speed of 620 mm/s with standard 43 kg/m³ resin (with a molar ratio of F:U; SL;1,14 and CL: 1,20) for PB production was calculated as 0,45 N/mm² (TS EN 319), the bending strength 13,2 N/mm² (TS EN 310) and free formaldehyde value being as 8,70 mg/100g (composite board) (TS EN 120).

The tensile strength of the 17,91 mm thick (TS EN 324-1) PB reference board at the concentration of 625 kg/m³ (TS EN 323) produced at a press speed of 600 mm/s with 45 kg/m³ UFKT-37 resin (with a molar ratio of F:U+P SL;0,98 and CL: 1,07) for PB production was calculated as 0,42 N/mm² (TS EN 319), the bending strength 13,1 N/mm² (TS EN 310) and free formaldehyde value being as 2,96 mg/100g (composite board) (TS EN 120).

The tensile strength of the 17,98 mm thick (TS EN 324-1) PB reference board at the concentration of 624 kg/m³ (TS EN 323) produced at a press speed of 620 mm/s with 46 kg/m³ resin (with a molar ratio of F:U+P SL;0,98 and CL: 1,07) for PB production was calculated as 0,41 N/mm² (TS EN 319), the bending strength 12,9 N/mm² (TS EN 310) and free formaldehyde value being as 3,24 mg/100g (composite board) (TS EN 120).

Physical, mechanical and free formaldehyde values of the wood-based composite boards (PB) produced with resin (with a molar ratio of F:U+P SL;0,98 and CL: 1,07) consumption similar to the resin of the said invention (UFKT-37) and the standard PB (chipboard) produced with the standard urea formaldehyde (with a molar ratio of F:U; SL;1,14 and CL: 1,20) without using any catcher are between the acceptable limits according to the standards of the TS EN. It means that the free formaldehyde analysis results of the boards produced with the resin of the invention are similar to those of a raw wooden. According to the Table 1, it is conforming to the CARB 1 standards. In addition, according to the result of the 2,96 mg/100g (composite board) (TS EN 120), the resin of the invention allows for the production of PB conforming to the E0 standards.

Due to the production costs of the resin of the invention resulting during the PB production, it increases the costs of PB production by about 6-12% compared to the UF glue in order to reach the values of the CARB2 free formaldehyde.

According to the Chamber method of 1 m³ and TS EN 717-1 conducted by the WKI (Fraunhofer Institute for wood research Wilhelm-Klauditz Institut-WKI), the free formaldehyde analysis result of the CB products produced with the UFKT-37 resin was found to be 0,06 ppm. As a result of the TS EN 120 perforator analysis by the same institution, it was found 3,1 mg HCHO/100gr. The free formaldehyde value of the wood-based composite products produced with the resin of the invention is confirmed by the relevant institution to be conforming to the CARB2 results of the standards on the Table 1.

While the resin of the invention as in Figure 1 transforms into thermosetting during the combination of the wood-based composite board depending on the reaction stage under temperature and pressure of the resin during the pressing step numbered 11, the measurement values of the free formaldehyde emitted by the resin to the atmosphere are shown on the Table 2.

**Table 2: The results of the ambient free formaldehyde analysis made at the dimensioning unit numbered 12 in the Figure 1 of the resin of the invention (UFKT-37) and its comparison with the standard UF glue**

| Measured Unit | Measured Value (ppm) | Limit Values | | | |
|---|---|---|---|---|---|
| | | OSHA¹ ppm | NIOSH² | ACGIH³ ppm | KMÇSGÖHY⁴ Literature |
| SHS (UF) | 0,003 | 0,75^{∗∗} (TWA) | - | 0,3^{∗∗} (STEL) | - |
| SHS (UFKT-37) | 0,002 | 0,75^{∗∗} (TWA) | - | 0,3^{∗∗} (STEL) | - |

| | | | | | |
|---|---|---|---|---|---|
| - Occupational Safety & Health Administration (OSHA) - National Institute for Occupational Safety and Health (NIOSH) - American Conference of Government Industrial Hygienists (ACGIH) - Regulation for the Health and Safety Precautions for Working with Chemicals - TWA: Time Weighted Average Measured or Calculated According to the 8-Hour Reference Time Period - STEL: Value of the Exposure Limit or the Limit to be Exceeded within 15 Minutes unless Any Other Time is Indicated | | | | | |

According to Table 2 "The results of the ambient free formaldehyde analysis made at the SHS dimensioning closed cabin section in press output numbered 12 in the Figure 1 of the resin of the invention (UFKT-37)", the free formaldehyde in the air decreased by 33.33%.

## Claims

1. A wood-based composite board products comprising copolymer resin that contains polyflavonoid, amino groups, urea and formaldehyde **characterized in that** copolymer resin comprises;
formaldehyde at a weight ratio of 25-40%,
sum of urea, and amino groups at a weight ratio 55-75%,
polyflavonoid at a weight ratio 1-12% in solid form.

2. The wood-based composite products of Claim 1 wherein the wood-based composite board products are chipboards (CB), medium density fiberboards (MDF), high density fiberboards (HDF) and oriented strand boards (OSB).

3. The wood-based composite products of Claim 1 wherein the said free formaldehyde emission is below the CARB2 5 mg free formaldehyde/100g (composite board) value for MDF and HDF, the CARB2 4 mg free formaldehyde/100g (composite board) value for CB and the E0 3mg free formaldehyde/100g (composite board) value for MDF-HDF and CP according to the TS EN 120 and TSEN 717-1 measurement methods.

4. The wood-based composite products of Claim 1 wherein the resin used in the production process of these products involves the following stages of processes:
a. The aqueous formaldehyde solution is charged into the reactor, and sodium hydroxide solution is added,
b. The first part of urea is charged into the reactor, and pH is adjusted to 7-9,
c. The mixture is heated up to 100°C, and pH is maintained between 4-6,
d. At the end of the polymerization, pH of the mixture is adjusted to 7-8 with sodium hydroxide,
e. Aqueous polyflavonoid solution at an increased temperatures is added to the reactor in a few charges, and pH is adjusted to 7-8,5,
f. The second part of urea is charged, and pH is adjusted to 6,5-9,
g. It is stirred until the polymerization reaction is terminated and then stored.

5. The wood-based composite products of Claim 1 wherein the resin used in the production process of these products involves the following stages of processes:
a. The aqueous formaldehyde solution is charged into the reactor, and pH is adjusted to 7,0-8,5 with sodium hydroxide,
b. The first part of urea is charged into the reactor so that the initial formaldehyde urea molar ratio becomes 1,7-3,0, and pH is adjusted to 7-9,
c. The mixture is heated up to 100°C, and pH is maintained between 4-6,
d. At the end of the polymerization, pH of the mixture is adjusted to 7-8,5 with sodium hydroxide,
e. 1-12% solid polyflavonoid is charged into the final product of the cooled resin solution, and pH of the final solution is adjusted to 7-8,5 with stabilizers,
f. The second part of urea is added as 0,8-1,3 into the reactor in a way that the final product resin urea formaldehyde molar ratio becomes 0,6-1,5, and pH is adjusted to 6,5-9,
g. Viscosity of the final product is adjusted to 55-300 cps at room temperature,
h. It is stirred until the polymerization reaction is terminated and then stored.

6. The resin production process of Claim 4 or 5 wherein the final product resin contains 25-40% formaldehyde, 55-75% urea, 1-12% polyflavonoid.

7. The production process of the wood-based composite board product wherein the product is medium density fiberboard (MDF) according to claim 2, it is **characterized by** the following steps of processes:
a. Chipping of the raw wood,
b. Baking of the chips at 180-200⁰C in steam at the refiner unit, addition of paraffin and fiberization,
c. Addition of the urea formaldehyde polyflavonoid copolymer resin onto the fibers,
d. Drying of the fibers up to a humidity rate of 8-14%,
e. Laying of the fibers and preparation of the board outline,
f. Finalization of boards through pressing under heat and pressure.

8. The production process of the medium density fiberboard (MDF) produced according to the Claim 8 wherein it is **characterized by** the following steps of processes:
a. Baking of the chips under 6-10 bar steam pressure at between 180-200⁰C at the refiner unit, addition of paraffin and fiberization.
b. Addition of the said urea formaldehyde polyflavonoid copolymer resin solution onto the fibers by spraying using the ecoresinator,
c. Laying of the fibers and preparing the board design, and pre-heating for packaging.

9. The production process of the wood-based composite board product wherein the product is chipboard according to claim 2, it is **characterized by** the following steps of processes:
a. Chipping of the raw wood,
b. Flaking and drying of them up to 1-2% of humidity,
c. Addition of the urea formaldehyde polyflavonoid copolymer resin onto the flakes,
d. Laying of the surface-layer and core-layer flakes and pre-pressing,
e. Finalization of boards through pressing under heat and pressure.

10. The production process of the wood-based composite board product wherein the product is chipboard according to claim 2, it is **characterized by** the following steps of processes:
a. Chipping of the raw wood,
b. Flaking of them at the flaker unit and drying of them up to 1,5% of humidity,
c. Addition of the urea formaldehyde polyflavonoid copolymer resin according to onto the flakes in the blender,
d. Laying of the surface-layer and core-layer flakes and pre-pressing,
e. Finalization of boards through pressing under heat and pressure.

## Patentansprüche

1. Ein holzbasiertes Verbundplattenprodukt, umfassend ein Copolymerharz, das Polyflavonoid, Aminogruppen, Harnstoff und Formaldehyd enthält, **dadurch gekennzeichnet, dass** das Copolymerharz folgendes umfasst;
Formaldehyd in einem Gewichtsanteil von 25-40%,
Summe aus Harnstoff und Aminogruppen in einem Gewichtsanteil von 55-75%,
Polyflavonoid in fester Form in einem Gewichtsanteil von 1-12%.

2. Holzbasierte Verbundwerkstoffprodukte nach Anspruch 1, wobei die holzbasierten Verbundplattenprodukte Spanplatten (CB), mitteldichte Faserplatten (MDF), hochdichte Faserplatten (HDF) und Grobspannplatten (OSB) sind.

3. Holzbasierte Verbundwerkstoffprodukte nach Anspruch 1, wobei der genannte Emissionswert von freiem Formaldehyd gemessen nach den Messverfahren TS EN 120 und TSEN 717-1 unter CARB2-Wert von 5 mg freiem Formaldehyd/100g (Verbundwerkstoffplatte) für MDF und HDF, unter CARB2-Wert von 4 mg freiem Formaldehyd/100g (Verbundwerkstoffplatte) für CB und unter E0-Wert von 3 mg freiem Formaldehyd/100g (Verbundwerkstoffplatte) für MDF-HDF und CP liegt.

4. Holzbasierte Verbundwerkstoffprodukte nach Anspruch 1, wobei das im Herstellungsverfahren dieser Produkte verwendete Harz folgende Verfahrensschritte umfasst:
a. Die wässrige Formaldehydlösung wird in den Reaktor gegeben, und es wird Natriumhydroxidlösung dazugegeben,
b. Die erste Portion des Harnstoffs wird in den Reaktor gegeben, und der pH-Wert wird auf 7-9 eingestellt,
c. Das Gemisch wird auf 100°C erhitzt, und der pH-Wert wird zwischen 4-6 gehalten,
d. Am Ende der Polymerisation wird der pH-Wert des Gemischs mit Natriumhydroxid auf 7-8 eingestellt,
e. In den Reaktor wird wässrige Polyflavonoidlösung auf erhöhter Temperatur in wenigen einzelnen Chargen gegeben und der pH-Wert wird auf 7-8,5 eingestellt,
f. Die zweite Portion des Harnstoffs wird zugegeben, und der pH-Wert wird auf 6,5-9 eingestellt,
g. Es wird gerührt, bis die Polymerisationsreaktion beendet ist, und dann wird es eingelagert.

5. Holzbasierte Verbundwerkstoffprodukte nach Anspruch 1, wobei das im Herstellungsverfahren dieser Produkte verwendete Harz folgende Verfahrensschritte umfasst:
a. Die wässrige Formaldehydlösung wird in den Reaktor gegeben, und der pH-Wert wird mit Natriumhydroxid auf 7,0-8,5 eingestellt,
b. Die erste Portion des Harnstoffs wird in den Reaktor gegeben, so dass das anfängliche Molverhältnis von Formaldehyd-Harnstoff 1,7-3,0 beträgt, und der pH-Wert wird auf 7-9 eingestellt,
c. Das Gemisch wird auf 100°C erhitzt, und der pH-Wert wird zwischen 4-6 gehalten,
d. Am Ende der Polymerisation wird der pH-Wert des Gemischs mit Natriumhydroxid auf 7-8,5 eingestellt,
e. 1-12% festes Polyflavonoid wird in das Endprodukt der gekühlten Harzlösung gegeben, und der pH-Wert der Endlösung wird mit Stabilisatoren auf 7-8,5 eingestellt,
f. Die zweite Portion des Harnstoffs wird in einem Molverhältnis von 0,8-1,3 in den Reaktor gegeben, so dass das Molverhältnis von Harz-Harnstoff-Formaldehyd im Endprodukt zwsichen 0,6-1,5 beträgt, und der pH-Wert wird auf 6,5-9 eingestellt,
g. Die Viskosität des Endprodukts wird auf 55-300 cps bei Raumtemperatur eingestellt,
h. Es wird gerührt, bis die Polymerisationsreaktion beendet ist, und dann eingelagert.

6. Harzherstellungsverfahren nach Anspruch 4 oder 5, wobei das Harzendprodukt 25-40% Formaldehyd, 55-75% Harnstoff und 1-12% Polyflavonoid enthält.

7. Herstellungsverfahren für holzbasiertes Verbundplattenprodukt, wobei es sich bei dem Produkt um eine mitteldichte Faserplatte (MDF) nach Anspruch 2 handelt, **gekennzeichnet durch** folgende Verfahrensschritte:
a. Zerspanen von Rohholz,
b. Backen von Holzspänen bei 180-200°C unter Dampf in der Refineranlage, Zugabe von Paraffin und anschliessendes Zerfasern,
c. Auftragen von Harnstoff-Formaldehyd-Polyflavonoid-Copolymerharz auf die Fasern,
d. Trocknen von Fasern bis zu einer Luftfeuchtigkeit von 8-14%,
e. Verlegen von Fasern und Vorbereitung eines Plattenumrisses,
f. Fertigstellen von Platten durch Pressen unter Hitze und Druck.

8. Herstellungsverfahren für mitteldichte, nach Anspruch 8 hergestellte Faserplatte (MDF), wobei es durch die folgende Verfahrensschritte gekennzeichnet ist:
a. Backen von Spänen unter 6-10 bar Dampfdruck bei 180-200°C in der Refineranlage, Zugabe von Paraffin und anschliessende Faserbildung,
b. Auftragen von der genannten Harnstoff-Formaldehyd-Polyflavonoid-Copolymer-Harzlösung auf die Fasern durch Sprühen mit einem Ecoresinator,
c. Verlegen von Fasern und Vorbereitung eines Plattendesigns, und Vorwärmen für die Verpackung.

9. Herstellungsverfahren für holzbasiertes Verbundplattenprodukt, wobei es sich bei dem Produkt um eine Spanplatte nach Anspruch 2 handelt, **gekennzeichnet durch** folgende Verfahrensschritte:
a. Zerspanen von Rohholz,
b. Zerkleinern zu Flocken und Trocknen bis zu 1-2% Feuchtigkeit,
c. Aufbringen von Harnstoff-Formaldehyd-Polyflavonoid-Copolymerharz auf die Flocken,
d. Verlegen von Deckschicht- und Kernschichtflocken und Vorpressen,
e. Fertigstellung der Platten durch Pressen unter Hitze und Druck.

10. Herstellungsverfahren für holzbasiertes Verbundplattenprodukt, wobei es sich bei dem Produkt um eine Spanplatte nach Anspruch 2 handelt, **gekennzeichnet durch** folgende Verfahrensschritte:
a. Zerspanen von Rohholz,
b. Zerkleinern zu Flocken in einer Zerkleinerungseinheit und Trocknen bis zu 1,5% Feuchtigkeit,
c. Auftragen von Harnstoff-Formaldehyd-Polyflavonoid-Copolymerharz auf die Flocken im Mischer,
d. Verlegen von Deckschicht- und Kernschichtflocken und Vorpressen,
e. Fertigstellung der Platten durch Pressen unter Hitze und Druck.

## Revendications

1. Un produit de panneau composite à base de bois comprenant résine de copolymère qui contient polyflavonoïde, groupes amino, urée et formaldéhyde **caractérisé en ce que** la résine de copolymère comprend :
formaldéhyde dans un rapport pondéral de 25-40%,
somme de l'urée et groups amino dans un rapport pondéral de 55-75%,
polyflavonoïde dans un rapport pondéral de 1-12% à la forme solide.

2. Les produits composites à base de bois selon la revendication 1, dans lesquels les produits de panneau composite à base de bois sont des panneaux de particules (CB), panneaux de fibres à densité moyenne (MDF), panneaux de fibres à haute densité (HDF) et panneaux de grandes particules orientées (OSB).

3. Les produits composites à base de bois selon la revendication 1 dans lesquels ladite émission de formaldéhyde libre est inférieure à la valeur CARB2 de 5 mg de formaldéhyde libre /100 g de (panneau composite) pour MDF et HDF, inférieure à la valeur CARB2 de 4 mg de formaldéhyde libre /100 g de (panneau composite) pour CB et inférieure à la valeur E0 de 3 mg de formaldéhyde libre/100 g de(panneau composite) pour MDF-HDF et CP selon des méthodes de mesure TS EN 120 et TS EN 717-1.

4. Les produits composites à base de bois selon la revendication 1 dans lesquels la résine utilisée dans le procédé de production de ces produits implique les étapes suivantes des procédés :
a. La solution aqueuse de formaldéhyde est chargée dans le réacteur et la solution d'hydroxyde de sodium est ajutée.
b. La première partie de l'urée est chargée dans le réacteur et la valeur de pH est réglée au 7-9,
c. Le mélange est chauffé jusqu'à 100°C et la valeur de pH est retenue entre 4-6,
d. A la fin de la polymérisation, la valeur de pH du mélange est réglée à 7-8 avec l'hydroxyde de sodium,
e. Solution aqueuse de polyflavonoïde à une température élevée est ajoutée au réacteur dans quelques charges et la valeur de pH est réglée à 7-8,5,
f. La deuxième partie de l'urée est chargée et la valeur de pH est réglée à 6,5-9,
g. Elle est mélangée jusqu'à la terminaison de la réaction de polymérisation et puis conservée.

5. Les produits composites à base de bois selon la revendication 1 dans lesquels la résine utilisée dans le procédé de production de ces produits implique les étapes suivantes de procédés :
a. La solution aqueuse de formaldéhyde est chargée dans le réacteur et la valeur de pH est réglée à 7,0-8,5 avec l'hydroxyde de sodium,
b. La première partie de l'urée est chargée dans le réacteur à ce que le rapport molaire initial d'urée-formaldéhyde soit 1,7-3,0, et la valeur de pH est réglée à 7-9,
c. Le mélange est chauffé jusqu'à 100°C et la valeur de pH est retenue entre 4-6,
d. A la fin de polymérisation, la valeur de pH du mélange est réglée à 7-8,5 avec l'hydroxyde de sodium,
e. 1-12% de polyflavonoïde solide est chargé au produit final de la solution de résine et la valeur de pH de la solution est réglée avec des stabilisants à 7-8,5,
f. La deuxième partie de l'urée est ajoutée telle que 0,8-1,3 dans le réacteur de manière à ce que le rapport molaire de résine urée-formaldéhyde du produit final soit 0,6-1,5, et la valeur de pH est réglée à 6,5-9,
g. La viscosité du produit final est réglée à 55-300 cps à température ambiante,
h. Il est mélangé jusqu'à ce que la réaction de polymérisation se termine et puis il est conservé.

6. Le procédé de production de résine selon les revendications 4 ou 5 dans lequel le produit final de résine contient 25-40% de formaldéhyde, 55-75% de l'urée et 1-12% de polyflavonoïde.

7. Le procédé de production du produit de panneau composite à base de bois dans lequel le produit est un panneau de fibres à densité moyenne (MDF) selon la revendication 2, il est **caractérisé par** les étapes suivantes :
a. Déchiquetage du bois brut,
b. Cuisson des copeaux à 180-200°C à la vapeur dans l'unité de raffinage, l'ajout de la paraffine, et la fibérisation,
c. L'ajout de résine copolymère urée-formaldéhyde polyflavonoïde sur des fibres,
d. Séchage des fibres jusqu'à un rapport d'humidité de 8-14%,
e. Pose des fibres et préparation du plan de panneau,
f. Finalisation des panneaux par pressage à chaud et sous pression.

8. Le procédé de production du panneau de fibres à densité moyenne (MDF) produit selon la revendication 8 dans lequel il est **caractérisé par** les étapes suivantes de procédés :
a. Cuisson des copeaux à 180-200°C sous la pression de vapeur de 6-10 bars dans l'unité de raffinage, l'ajout de la paraffine, et la fibérisation,
b. L'ajout de ladite résine copolymère urée formaldéhyde polyflavonoïde sur des fibres en atomisant par écorésinateur,
c. Pose de fibres et préparation de la conception du panneau, et préchauffage pour le conditionnement.

9. Le procédé de production du produit de panneau composite à base de bois dans lequel le produit est un panneau de particules selon la revendication 2, il est **caractérisé par** les étapes suivantes de procédés :
a. Déchiquetage du bois brut,
b. Leur écaillage et séchage jusqu'à une humidité de 1-2%,
c. L'ajout de résine copolymère urée formaldéhyde polyflavonoïde sur des écailles,
d. Pose des écailles de la couche superficielle et de la couche centrale et pré-pressage,
e. Finalisation des panneaux par pressage à chaud et sous pression.

10. Le procédé de production du produit de panneau composite à base de bois dans lequel le produit est un panneau de particules selon la revendication 2, il est **caractérisé par** les étapes suivantes de procédés :
a. Déchiquetage du bois brut,
b. Leur écaillage dans l'unité d'écaille and leur séchage jusqu'à une humidité de 1,5%,
c. L'ajout de résine copolymère urée formaldéhyde polyflavonoïde sur des écailles dans mélangeur,
d. Pose des écailles de la couche superficielle et de la couche centrale, et pré-pressage,
e. Finalisation des panneaux par pressage à chaud et sous pression.
